# NEUE EUROPÄISCHE PATENTSCHRIFT

(11) **EP 1 321 224 B2**
(45) Veröffentlichungstag und Bekanntmachung des Hinweises auf die Entscheidung über den Einspruch: **21.09.2005**
(45) Hinweis auf die Patenterteilung: 02.07.2003
(21) Anmeldenummer: 02004835.1
(22) Anmeldetag: 02.03.2002
(51) Int. Cl.: B23Q 7/14, B65G 47/00

(54) **Werkstückträger-Wechseleinrichtung für Werkzeugmaschinen**
Device for exchanging workpiece carrier for machine tools
Dispositif pour l'échange de support de pièces pour machines-outils

(43) Veröffentlichungstag der Anmeldung: 25.06.2003
(73) Patentinhaber: Maschinenfabrik Berthold Hermle Aktiengesellschaft, D-78559 Gosheim (DE)
(72) Erfinder: Bernhard, Franz-Xaver, 78549 Spaichingen (DE); Kohler, Rainer, 78595 Hausen o.V. (DE)
(74) Vertreter: Vetter, Hans

(56) Entgegenhaltungen:
- EP-A- 0 409 085
- EP-A- 1 084 794
- DE-A- 4 130 097
- DE-A- 10 020 804
- DE-A- 19 513 827
- US-A- 5 768 768
- US-A- 5 992 608

## Beschreibung

Die Erfindung betrifft eine Werkstückträger-Wechseleinrichtung für Werkzeugmaschinen, mit einer Werkstückträger-Umsetzeinrichtung zur Umsetzung der Werkstückträger zwischen einer Bearbeitungsstation und einer Rüststation, wobei die Werkstückträger-Umsetzeinrichtung ein um eine vertikale Achse drehbares Koppelelement mit zwei gegenüberliegenden Koppelstellen zum Ankoppeln von Werkstückträgern besitzt.

Bei einer derartigen, aus der EP 0409085 B1 bekannten Wechseleinrichtung ist ein um 180° drehbares Koppelelement für Werkstückträger an der Maschine selbst angeordnet, wobei eine lineare Werkstückträger-Verschiebestation zusätzlich erforderlich ist, um den jeweils mit Werkstücken versehenen Werkstückträger zur Bearbeitungsstation zu bringen. Neben der schlechten Zugänglichkeit zum Arbeitsbereich durch die direkt an der Maschine angeordnete Wechseleinrichtung ist durch die Verschiebestation ein großer Platzbedarf erforderlich. Ein nachträglicher Anbau an eine Standardmaschine ist in der Regel nicht möglich. Durch die Anbringung an der Maschine ist eine unzureichende Entkoppelung zwischen Bearbeitungsstation und Rüststation vorhanden, so dass die Gefahr besteht, dass beim Rüstvorgang, also bei der Bestückung des Werkstückträgers an der Rüststation mit neuen Werkstücken, die Bearbeitung an der Bearbeitungsstation ungünstig beeinträchtigt wird. Ein weiterer Nachteil besteht darin, dass der Werkstückträgerwechsel infolge der Umsetzung durch Schwenk- und Linearbewegungen unbefriedigend lange dauert.

Aus der DE 19513827 A1 und der DE 10020804 A1 sind vollständig in der Maschine integrierte Werkstückträger-Wechseleinrichtungen bekannt, bei denen keine Linearbewegungen erforderlich sind. Hier würde ein nachträglicher Anbau an eine Standardmaschine einen noch größeren Aufwand bedeuten, der einen solchen Anbau nahezu unmöglich machen würde. Durch die Einheit von Rüststation und Bearbeitungsstation werden beim hauptzeitparallelen Rüsten Schwingungen und Kräfte auf den Bearbeitungstisch übertragen, was die Bearbeitungsgenauigkeit negativ beeinträchtigt. Ein automatisches Bestücken mittels eines Handling-Systems ist daher hier noch problematischer. Ebenfalls nachteilig ist die schlechte Zugänglichkeit zur Bearbeitungsstation durch den fest an der Maschine angebrachten Wechseltisch.

Schließlich ist aus der EP 1084794 A1 eine Werkstückträgerwechseleinrichtung mit einem Handling-System bekannt, bei der die Werkstückträger über ein Belade-Handling von einem Palettenregal zur Bearbeitungsstation gebracht werden. Dies führt zwar zu einer guten Entkoppelung von Bearbeitungsstation und Rüststation und zu einer guten Zugänglichkeit zum Arbeitsbereich, jedoch ist ein sehr großer Platzbedarf bei einer aufwendigen und kostenintensiven Konstruktion erforderlich, wobei der Werkstückträgerwechsel einen relativ großen Zeitaufwand benötigt.

Eine Aufgabe der vorliegenden Erfindung besteht darin, eine Werkstückträger-Wechseleinrichtung zu schaffen, die bei guter Entkoppelung zwischen Bearbeitungsstation und Rüststation, guter Zugänglichkeit zur Bearbeitungsstation bei einfachem und kostengünstigem Aufbau schnelle Werkstückträgerwechsel ermöglicht und leicht nachträglich an Standardmaschinen anbringbar ist.

Diese Aufgabe wird erfindungsgemäß dadurch gelöst, dass das Koppelelement am freien Endbereich eines um eine vertikale Achse schwenkbaren Schwenkarms drehbar gelagert ist.

Die Vorteile der erfindungsgemäßen Lösung bestehen insbesondere darin, dass durch den horizontal schwenkbaren Schwenkarm mit drehbar gelagertem Koppelelement nur eine mechanische Baugruppe für das Zuführen und das Wechseln der Werkstückträger bzw. Paletten benötigt wird. Das Koppelelement ist nicht fest an der Maschine angebracht, sondern an einem von der Maschine unabhängigen Schwenkarm, was zum einen eine leichte Nachrüstbarkeit und zum anderen eine gute Entkoppelung zwischen Maschine und Rüststation gewährleistet. Der Arbeitsbereich der Werkzeugmaschine bleibt gut zugänglich, da der Schwenkarm weggeschwenkt werden kann. Durch die Überlagerung einer Schwenk- und Drehbewegung wird erreicht, dass das Koppelelement entlang einer vorgegebenen, optimierten Bahnkurve verfahren werden kann. Dies ermöglicht schnelle Palettenwechsel auch bei ungünstigen Platzverhältnissen.

Durch die separate Anordnung der Rüststation kann ein automatisches Be- und Entladen derselben mit Paletten durch eine am Rüstplatz angeordnete Zuführeinrichtung, zum Beispiel ein Förderband, realisiert werden.

Durch die in den Unteransprüchen aufgeführten Maßnahmen sind vorteilhafte Weiterbildungen und Verbesserungen der im Anspruch 1 angegebenen Werkstückträger-Wechseleinrichtung möglich.

Die Schwenkachse des Schwenkarms ist zweckmäßigerweise seitlich versetzt zum Zugangsbereich der Bearbeitungsstation angeordnet, um eine möglichst gute Zugänglichkeit zum Bearbeitungsbereich zu erreichen. Der Zugangsbereich ist mit einer schließbaren Türanordnung versehen, die insbesondere elektronisch steuerbar ist, um ein Passieren des Schwenkarms zur Beund Entladung mit Werkstückträgern zu ermöglichen.

Zur Überlagerung der Schwenk- und Drehbewegungen von Schwenkarm und Koppelelement ist in vorteilhafter Weise ein das Koppelelement antreibendes Kurbelgetriebe vorgesehen, das durch die Bewegung des Schwenkarms antreibbar ist. Hierbei kann es sich zweckmäßigerweise um ein so genanntes Viergelenk-Getriebe handeln. Alternativ hierzu kann auch ein elektrischer oder fluidischer Stellantrieb für das Koppelelement vorgesehen sein, der durch eine elektronische Steuereinrichtung zur Erzielung der Bewegungsüberlagerung steuerbar ist.

Die Bearbeitungsstation besitzt zweckmäßigerweise einen Werkstücktisch, der mit Mitteln zur Aufnahme und Fixierung von Werkstückträgern versehen ist.

Das Koppelelement und/oder der Schwenkarm ist mit einer Vertikal-Hubeinrichtung versehen, wobei die Koppelstellen des Koppelelements zur Ankoppelung an die Werkstückträger von unten her durch einen Vertikalhub ausgebildet sind. Die Koppelstellen des Koppelelements sind vorzugsweise mit kraft- oderformschlüssigen Haltemitteln zur lösbaren Fixierung von Werkstückträgern versehen, beispielsweise mit einem hydraulischen Löse- bzw. Spannsystem, um die Umsetzung der zum Teil sehr schweren Werkstückträger und Werkstücke sicher zu gewährleisten. Bei kleineren Werkstückträgern kann eine formschlüssige Halterung ausreichend sein.

Die Rüststation ist als von der Werkzeugmaschine getrennte, unabhängige Station ausgebildet, was zum einen eine sichere Entkoppelung und zum anderen eine einfache Nachrüstbarkeitvon Maschinen gewährleistet.

Die Rüststation ist zweckmäßigerweise mit einer Schwenktüranordnung versehen, die an einer einen Vorraum vor dem Zugangsbereich zur Bearbeitungsstation bildenden Wandung angeordnet ist, wobei in einer ersten Arbeitsstellung die Rüststation in diesen Vorraum eingebunden und in einer zweiten Arbeitsstellung die Rüststation vom Vorraum abgetrennt ist. Dadurch kann der Operator vom Zugangsbereich zur Bearbeitungsstation aus in der einen Arbeitsstellung auch die Rüststation leicht erreichen, und in der zweiten Arbeitsstellung verschließt sich die Schwenktüranordnung zwischen der Bearbeitungsstation und der Rüststation, so dass eine spritzwasserdichte Abschirmung des Arbeitsraums erreicht wird und die Palette in der Rüststation beispielsweise durch Druckluft oder Sprühmittel gereinigt werden kann.

Ein Ausführungsbeispiel der Erfindung ist in der Zeichnung dargestellt und in der nachfolgenden Beschreibung näher erläutert. Es zeigen:
- Fig. 1: eine Ansicht einer mit einer Werkstückträger-Wechseleinrichtung versehenen Werkzeugmaschine von oben bei der Abkoppelung einer Werkstückpalette an der Rüststation,
- Fig. 2: dieselbe Anordnung bei durch die Schwenktüranordnung vom Arbeitsraum abgetrennter Rüststation,
- Fig. 3: dieselbe Anordnung beim Ankoppeln des Koppelelements an einem Werkstückträger in der Bearbeitungsstation,
- Fig. 4: dieselbe Anordnung bei der Bewegung des Schwenkarms bzw. des Koppelelements von der Bearbeitungsstation zur Rüststation,
- Fig. 5: dieselbe Anordnung bei der Ankoppelung des einseitig bereits mit dem von der Bearbeitungsstation geholten Werkstückträger versehenen Koppelelements an einen Werkstückträger in der Rüststation,
- Fig. 6: dieselbe Anordnung bei der Rotation des Koppelelements um 180° und
- Fig. 7: dieselbe Anordnung beim Abkoppeln des von der Bearbeitungsstation geholten Werkstückträgers an der Rüststation.

Bei der in den Figuren dargestellten Werkzeugmaschine handelt es sich um eine Bearbeitungsmaschine mit vertikalem Spindelkopf 10 in Gantry-Bauweise. Auf zwei Seitenwandungen 11, 12 des Maschinenständers ist ein Schlitten 13 horizontal verfahrbar. An dessen Vorderseite ist der Spindelkopf 10 quer dazu und vertikal verfahrbar. Im hinteren Bereich des Maschinenständers ist schematisch ein Werkzeugwechsel-Magazin 14 dargestellt. Zwischen den Seitenwandungen 11, 12 ist unterhalb des Spindelkopfes 10 ein Schwenkrundtisch zur direkten Aufnahme von Werkstücken oder zur Aufnahme von als Werkstückpaletten 16 ausgebildeten Werkstückträgern um eine horizontale Achse schwenkbar angeordnet. Der Zugangsbereich 17 vor dem die Bearbeitungsstation bildenden Schwenkrundtisch 15 ist durch seitlich oder vertikal verschiebbare oder aufklappbare Türen 18 verschließbar. Seitlich an der Werkzeugmaschine ist ein ein- und ausschwenkbares Bedienpult 19 angeordnet.

Die dargestellte Ausführung der Werkzeugmaschinen ist lediglich beispielhaft, das heißt, die im Folgenden beschriebene Werkstückträger-Wechseleinrichtung bzw. Werkstückpaletten-Wechseleinrichtung 20 kann prinzipiell an jeder beliebigen Werkzeugmaschine angeordnet werden, um Werkstückpaletten 16 zwischen einer Rüststation 21 außerhalb der Werkzeugmaschine und der Bearbeitungsstation der Werkzeugmaschine, im Ausführungsbeispiel den Schwenkrundtisch 15, zu verfahren. So kann anstelle eines Schwenkrundtisches 15 auch eine andere Werkstückaufnahme treten, die zur Fixierung von Werkstückpaletten ausgebildet ist. Hierzu kann beispielsweise ein an sich bekanntes hydraulisches Löse- bzw. Spannsystem mit "Vaterkonturen" und "Mutterkonturen" dienen. Im einfachsten Falle kann ein fester Werkstücktisch vorgesehen sein.

Die Werkstückpaletten-Wechseleinrichtung 20 ist nach Art einer Kabine mit einer Kabinenwandung 22 ausgebildet, die an die Werkzeugmaschinenwandung 23 angesetzt, anmontiert oder an dieser aufgestellt wird. Innerhalb der Kabine bzw. Kabinenwandung 22 ist ein Schwenkarm 24 um eine vertikale Schwenkachse horizontal verschwenkbar. Die Schwenkachse ist dabei seitlich neben dem Zugangsbereich 17 zur Bearbeitungsstation angeordnet, um den freien Zugang zum Zugangsbereich 17 nicht zu behindern. Am freien Endbereich des Schwenkarms 24 ist ein Koppelelement 25 zur Ankoppeln von zwei Werkstückpaletten 16 an einander gegenüberliegenden Koppelstellen 26, 27 um eine vertikale Achse drehbar gelagert. Der Antrieb für die Drehung des Koppelelements 25 erfolgt über ein Kurbelgetriebe 28 in Abhängigkeit der Drehung des Schwenkarms 24. Hierzu dient beispielsweise ein so genanntes Viergelenk-Getriebe. Durch dieses Kurbelgetriebe 28 kann die Überlagerung der Schwenkbewegung des Schwenkarms 24 mit der Drehung des Koppelelements 25 so eingestellt werden, dass ein optimaler Übergang von Werkstückpaletten 16 zwischen der Rüststation 21 und dem Schwenkrundtisch 15 erreicht wird. Alternativ zu einem Kurbelgetriebe 28 kann die Drehung des Koppelelements 25 auch über einen elektrischen oder fluidischen Stellantrieb elektronisch gesteuert erfolgen.

Zur Ankoppelung von Werkstückpaletten 16 an das Koppelelement 25 sind die Koppelstellen 26, 27 als Passvorsprünge ausgebildet, die in entsprechende Passausnehmungen 29 eingreifen. Dies erfolgt jeweils von unten her, wozu das Koppelelement 25 und/oder der Schwenkarm 24 mit einer nicht näher dargestellten Vertikalhub-Einrichtung versehen ist. Wenn die Koppelstellen 26 bzw. 27 jeweils von unten her in eine derartige Passausnehmung 29 einer Werkstückpalette 16 als formschlüssige Halterung eingeführt sind, kann noch eine kraftschlüssige Fixierung erfolgen, beispielsweise über ein hydraulisches Löse- bzw. Spannsystem. Bei kleineren Paletten kann auch auf eine solche kraftschlüssige Fixierung verzichtet werden.

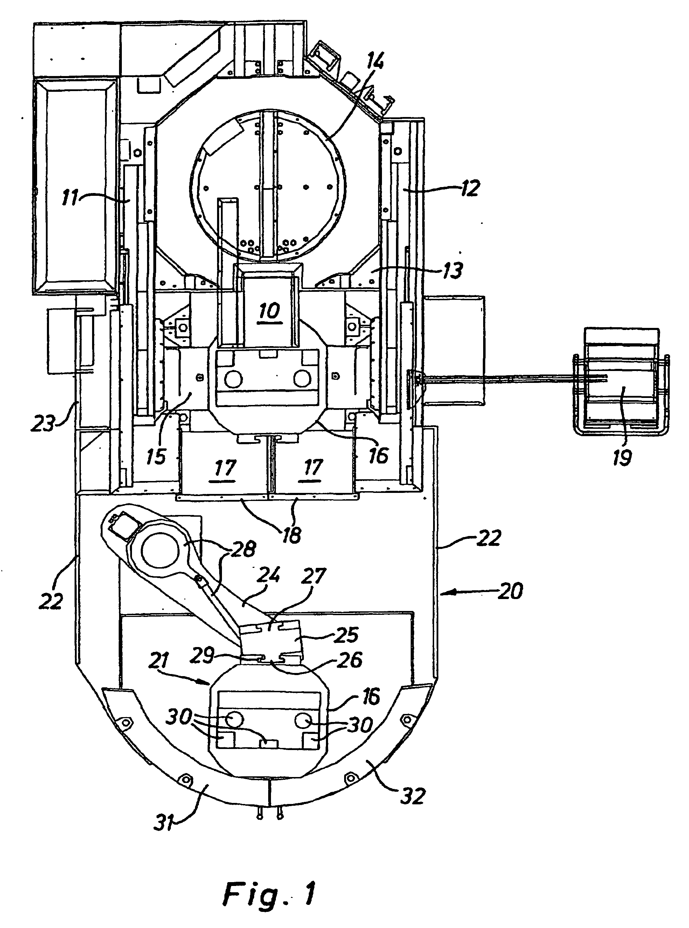

In der Position gemäß Fig. 1 wird eine mit bearbeiteten Werkstücken 30 versehene Werkstückpalette 16 an der Rüststation 21 abgesetzt, indem das Koppelelement 25 nach dem Lösen einer eventuell vorhandenen Fixierung nach unten bewegt wird. Die Werkstückpalette 16 wird dabei auf einen nicht dargestellten, zum Beispiel als Drehtisch ausgebildeten Rüsttisch der Rüststation 21 abgesetzt. Während dieses Vorgangs erfolgt die Bearbeitung von auf einer zweiten Werkstückpalette 16 angeordneten Werkstücken an der Bearbeitungsstation, also auf dem Schwenkrundtisch 15 durch Werkzeuge am Spindelkopf 10.

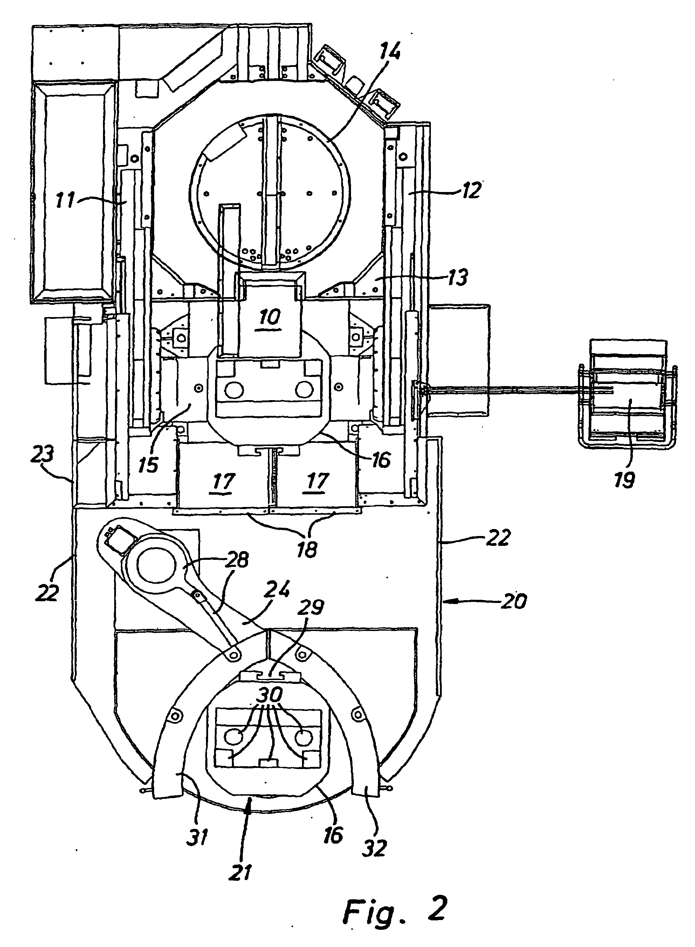

Die Kabinenwandung 22 der Rüstkabine bzw. Wechselkabine besitzt zwei gekrümmte Schwenktüren 31, 32, die den von der Werkzeugmaschine abgewandten Bereich der Rüstkabine verschließen. Zur Reinigung der auf der Rüststation 21 aufgesetzten Werkstückpalette 16 und zur Beladung können gemäß Fig. 2 die Schwenktüren 31, 32 so nach innen geschwenkt werden, dass sie die Rüststation 21 vom übrigen Innenraum der Rüstkabine abtrennen. Die Rüstkabine bzw. Wechselkabine ist nunmehr spritzwasserdicht abgeschirmt, und die Werkstückpalette 16 kann mit Druckluft und/oder Sprühpistolen gereinigt werden. Anschließend wird entweder die Werkstückpalette 16 durch eine andere mit unbearbeiteten Werkstücken ausgetauscht, oder sie wird mit unbearbeiteten Werkstücken bestückt. Während dieses Vorgangs können die Schwenktüren 31, 32 in der in Fig. 2 dargestellten Abschirmposition verbleiben und werden dann anschließend wieder in die in Fig. 1 dargestellte Grundposition zurückgeschwenkt. Je nach Art der Zuführung neuer Werkstückpaletten können die Schwenktüren 31, 32 auch schon zuvor wieder in die Grundposition zurückgeschwenkt werden.

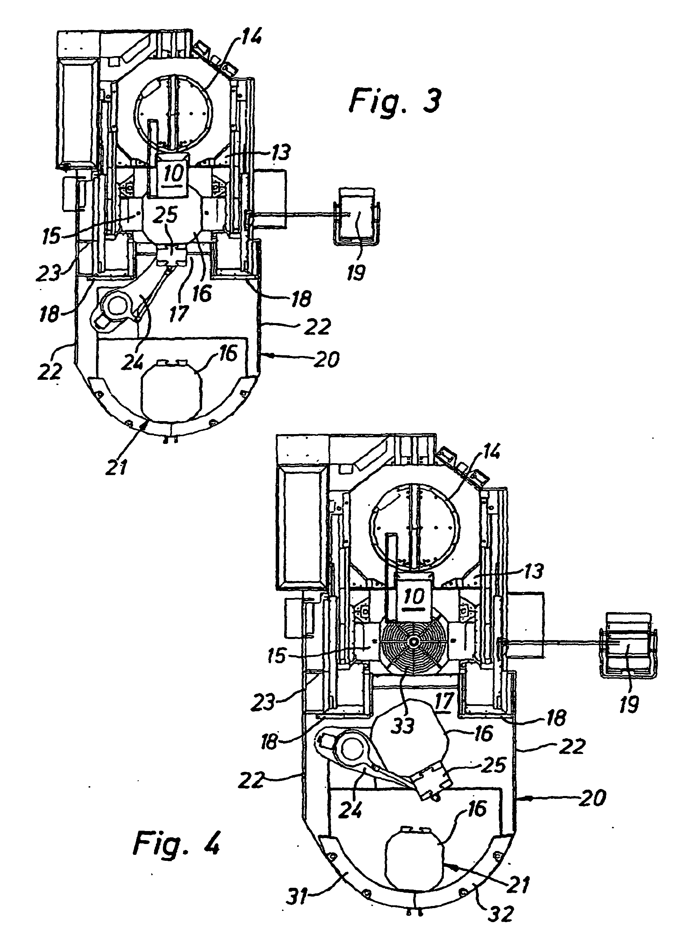

Nach, vor oder während der Umrüstung auf der Rüststation 21 schwenkt der Schwenkarm nun gemäß Fig. 3 zum Schwenkrundtisch 15 hin, wobei sich die Türen 18 am Zugangsbereich 17 der Werkzeugmaschine automatisch öffnen. Durch Anheben des Koppelelements 25 erfolgt eine Ankoppelung an die auf dem Schwenkrundtisch 15 angeordnete Werkstückpalette 16. Durch diesen Vertikalhub wird die Werkstückpalette 16 auch vom Schwenkrundtisch 15 abgehoben, nachdem zuvor die Fixierung gelöst worden ist. Dies erfolgt automatisch ebenso wie die eventuelle zusätzliche Fixierung am Koppelelement 25.

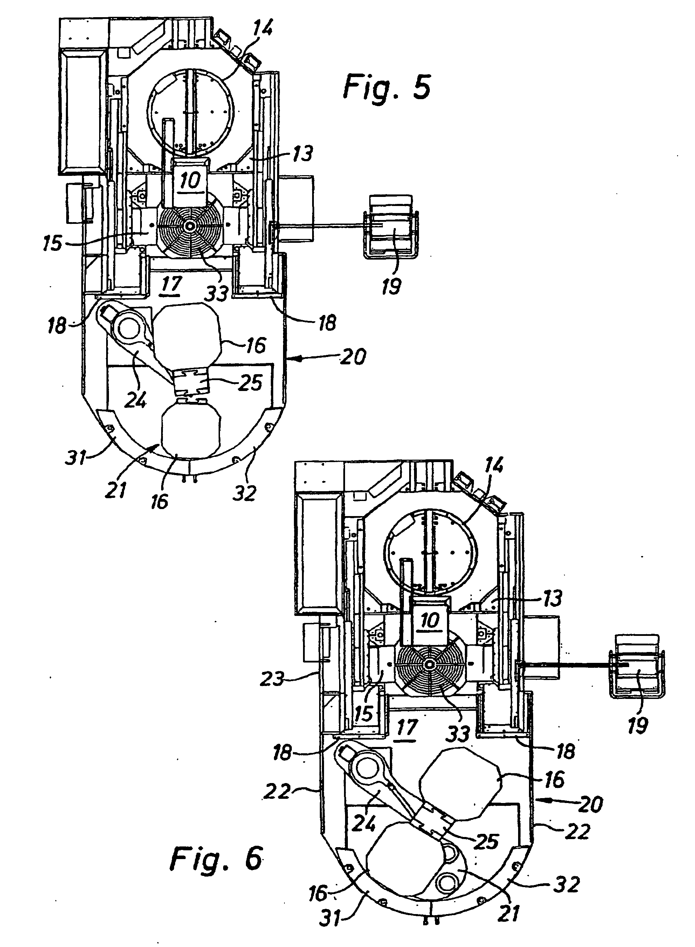

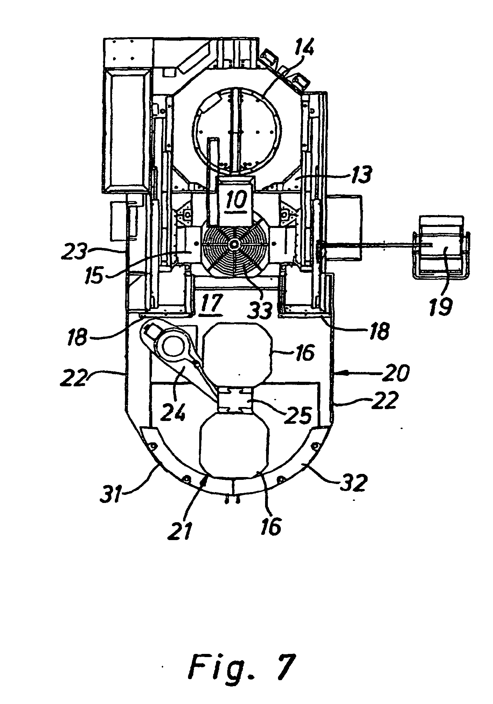

Gemäß Fig. 4 erfolgt nun eine Rückbewegung der am Schwenkarm 24 bzw. Koppelelement 25 angekoppelten Werkstückpalette 16 mit bearbeiteten Werkstücken, die zur Vereinfachung nicht dargestellt sind. Durch entsprechende Überlagerung der Schwenkbewegung des Schwenkarms 24 und der Drehbewegung des Koppelelements 25 kann eine optimale Bewegung der Werkstückpalette 16 durch den Zugangsbereich 17 hindurch bis zur Rüststation 21 eingestellt werden, die in der Darstellung gemäß Fig. 5 erreicht wird. Dort erfolgt eine Ankoppelung des Koppelelements 25 an die dort abgelegte Werkstückpalette 16 mit unbearbeiteten Werkstücken. Nach dem Ankoppeln in der beschriebenen Weise erfolgt gemäß Fig. 6 ein Drehvorgang des Koppelelements 25 um 180°. Fig. 7 zeigt die Position am Ende dieser Drehung an. Die mit den bearbeiteten Werkstücken versehene Werkstückpalette 16 wird nun durch Absenken und Entkoppeln auf die Rüststation 21 abgelegt, und die noch am Koppelelement 25 verbleibende Werkstückpalette 16 mit den unbearbeiteten Werkstücken wird gemäß Fig. 3 zum Schwenkrundtisch 15 bewegt, dort entkoppelt und abgelegt, worauf eine automatische Fixierung bzw. ein Festspannen am Schwenkrundtisch 15 erfolgt.

In den Fig. 4 bis 7 ist erkennbar, dass der Schwenkrundtisch 15 noch mit einem Drehtisch 33 versehen ist. Dieser ist optional. Im einfachsten Falle kann anstelle eines Schwenkrundtisches 15 auch ein fester Werkstücktisch treten.

Das Öffnen und Schließen der Türen 18 erfolgt jeweils automatisch beim Passieren des Schwenkarms 24 bzw. einerdaran angeordneten Werkstückpalette 16.

Zum Zuführen von Werkstückpaletten mit unbearbeiteten Werkstücken und Abführen von Werkstückpaletten 16 mit bearbeiteten Werkstücken zu der Rüststation 21 bzw. von dieser weg kann eine nicht dargestellte Zuführeinheit dienen, im einfachsten Falle ein Förderband. Die Rüststation 21 kann jedoch auch mit einem Palettenlager in Wirkverbindung stehen, beispielsweise mit einem Palettenhochregal mit Lift zur Zuführung der Paletten zur Rüststation 21.

## Patentansprüche

1. Werkstückträger-Wechseleinrichtung für Werkzeugmaschinen, mit einer Werkstückträger-Umsetzeinrichtung zur Umsetzung der Werkstückträger (16) zwischen einer Bearbeitungsstation (15) und einer Rüststation (21), wobei die Werkstückträger-Umsetzeinrichtung ein um eine vertikale Achse drehbares Koppelelement (25) mit zwei gegenüberliegenden Koppelstellen (26, 27) zum Ankoppeln von Werkstückträgern (16) besitzt, das am freien Endbereich eines um eine vertikale Achse schwenkbaren Schwenkarms (24) drehbar gelagert ist, **dadurch gekennzeichnet, dass** eine Schwenktüranordnung (31, 32) an einer einen Vorraum vor dem Zugangsbereich (17) zur Bearbeitungsstation (15) bildenden Kabinenwandung (22) angeordnet ist und in einer ersten Arbeitsstellung die von der Werkzeugmaschine getrennte, unabhängige Rüststation (21) in diesen Vorraum einbindet und in einer zweiten Einstellung die Rüststation (21) vom Vorraum abtrennt, wobei die Werkstückträger-Umsetzeinrichtung im Vorraum angeordnet ist.

2. Werkstückträger-Wechseleinrichtung nach Anspruch 1, **dadurch gekennzeichnet, dass** die Schwenkachse des Schwenkarms (24) seitlich versetzt zum Zugangsbereich (17) der Bearbeitungsstation (15) angeordnet ist.

3. Werkstückträger-Wechseleinrichtung nach Anspruch 2, **dadurch gekennzeichnet, dass** der Zugangsbereich (17) mit einer schließbaren Türanordnung (18) versehen ist, die insbesondere automatisch und/oder elektronisch steuerbar ist.

4. Werkstückträger-Wechseleinrichtung nach einem der vorhergehenden Ansprüche, **dadurch gekennzeichnet, dass** ein das Koppelelement (25) antreibendes Kurbelgetriebe (28) vorgesehen ist, das durch die Bewegung des Schwenkarms (24) antreibbar ist.

5. Werkstückträger-Wechseleinrichtung nach einem der Ansprüche 1 bis 3, **dadurch gekennzeichnet, dass** ein elektrischer oder fluidischer Stellantrieb für das Koppelelement (25) vorgesehen ist, der durch eine elektronische Steuereinrichtung in Abhängigkeit der Bewegung des Schwenkarms (24) steuerbar ist.

6. Werkstückträger-Wechseleinrichtung nach einem der vorhergehenden Ansprüche, **dadurch gekennzeichnet, dass** die Bearbeitungsstation (15) einen Werkstücktisch besitzt, der mit Mitteln zur Aufnahme und Fixierung von Werkstückträgern (16) versehen ist.

7. Werkstückträger-Wechseleinrichtung nach einem der vorhergehenden Ansprüche, **dadurch gekennzeichnet, dass** das Koppelelement (25) und/oder der Schwenkarm (24) mit einer Vertikal-Hubeinrichtung versehen ist, und dass die Koppelstellen (26, 27) des Koppelelements (25) zum Ankoppeln an die Werkstückträger (16) von unten her durch einen Vertikalhub ausgebildet sind.

8. Werkstückträger-Wechseleinrichtung nach einem der vorhergehenden Ansprüche, **dadurch gekennzeichnet, dass** die Koppelstellen (26, 27) des Koppelelements (25) mit kraft- oder formschlüssigen Haltemitteln zur lösbaren Fixierung von Werkstückträgern (16) versehen sind.

## Claims

1. Work carrier changeover device for machine tools, with a work carrier transfer device for moving the work carrier (16) between a machining station (15) and a working station (21), wherein the work carrier transfer device has a coupling element (25) rotatable around a vertical axis and with two opposing coupling points (26, 27) for the coupling of work carriers (16), said coupling element (25) is pivotably mounted at the free end section of a swivel arm (24) capable of swivelling around a vertical axis, **characterised in that** a swivel door assembly (31, 32) is provided on a cabin wall (22) forming an outer space in front of the access zone (17) to the machining station (15) and, in a first operating position the working station (21) designed as an independent station separate from the machine tool, engages in this outer space, and in a second setting the working station (21) is separated from this outer space, whereby the work carrier transfer device is provided in the outer space.

2. Work carrier changeover device according to claim 1, **characterised in that** the swivel axis of the swivel arm (24) is offset to the side of the access zone (17) of the machining station (15).

3. Work carrier changeover device according to claim 2, **characterised in that** the access zone (17) is provided with a closable door assembly (18), which may be controlled in particular automatically or electronically.

4. Work carrier changeover device according to any of the preceding claims, **characterised in that** a crank mechanism (28) which may be driven by the movement of the swivel arm (24) is provided to drive the coupling element (25).

5. Work carrier changeover device according to any of claims 1 to 3, **characterised in that** an electrical or fluidic actuator is provided for the coupling element (25) and may be controlled by an electronic control unit in accordance with the movement of the swivel arm (24).

6. Work carrier changeover device according to any of the preceding claims, **characterised in that** the machining station (15) has a worktable provided with means for the holding and locating of work carriers (16).

7. Work carrier changeover device according to any of the preceding claims, **characterised in that** the coupling element (25) and/or the swivel arm (24) is or are provided with a vertical lifting device, and that the coupling points (26, 27) of the coupling element (25) are formed by a vertical lift for coupling to the work carriers (16) from below.

8. Work carrier changeover device according to any of the preceding claims, **characterised in that** the coupling points (26, 27) of the coupling element (25) are provided with non-positive or positive retaining means for releasable fixing of work carriers (16).

## Revendications

1. Dispositif d'échange de porte-pièce pour machines-outils, comportant un dispositif de transfert de porte-pièce pour le transfert des porte-pièces (16) entre un poste d'usinage (15) et un poste d'équipement (21), le dispositif de transfert de porte-pièce comportant un élément d'accouplement (25) pouvant tourner autour d'un axe vertical avec deux emplacements d'accouplement (26, 27) opposés pour l'accouplement de porte-pièces (16), lequel l'élément d'accouplement (25) est monté dans la zone terminale libre d'un bras pivotant (24) pouvant pivoter autour d'un axe vertical, **caractérisé en ce qu'**il est prévu un dispositif à porte pivotante (31, 32) sur une paroi de cabine (22) formant un sas devant la zone d'accès (17) au poste d'usinage (15), lequel dispositif à porte pivotante intègre, dans une première position de travail, le poste d'équipement (21), qui est réalisé en tant que poste indépendant, séparé de la machine-outil, à ce sas et, dans un deuxième réglage, sépare le poste d'équipement (21) du sas, le dispositif de transfert de porte-pièce étant prévu dans le sas.

2. Dispositif d'échange de porte-pièce selon la revendication 1, **caractérisé en ce que** l'axe de pivotement du bras pivotant (24) est disposé décalé latéralement par rapport à la zone d'accès (17) du poste d'usinage (15).

3. Dispositif d'échange de porte-pièce selon l'une des revendication 2, **caractérisé en ce que** la zone d'accès (17) est pourvue d'un dispositif à porte (18) pouvant être fermé, qui peut être commandé en particulier automatiquement et/ou électroniquement.

4. Dispositif d'échange de porte-pièce selon l'une des revendications précédentes, **caractérisé en ce qu'**il est prévu un mécanisme à manivelle (28) entraînant l'élément d'accouplement (25) et qui peut être entraîné par un bras pivotant (24).

5. Dispositif d'échange de porte-pièce selon l'une des revendications 1 à 3, **caractérisé en ce qu'**il est prévu un mécanisme de réglage électrique ou fluidique pour l'élément d'accouplement (25), qui peut être commandé au moyen d'un dispositif de commande électronique en fonction du mouvement du bras pivotant (24).

6. Dispositif d'échange de porte-pièce selon l'une des revendications précédentes, **caractérisé en ce que** le poste d'usinage (15) comporte une table porte-pièce qui est pourvue de moyens de réception et de fixation de porte-pièces (16).

7. Dispositif d'échange de porte-pièce selon l'une des revendications précédentes, **caractérisé en ce que** l'élément d'accouplement (25) et/ou le bras pivotant (24) est pourvu d'un dispositif de levage vertical, et **en ce que** les emplacements d'accouplement (26, 27) de l'élément d'accouplement (25) sont réalisés pour l'accouplement aux porte-pièces (16) à partir du bas, par une course verticale.

8. Dispositif d'échange de porte-pièce selon l'une des revendications précédentes, **caractérisé en ce que** les emplacements d'accouplement (26, 27) de l'élément d'accouplement (25) sont pourvus de moyens de maintien par force ou par complémentarité de forme pour la fixation non permanente de porte-pièces (16).
